(19)

Europäisches
Patentamt
European
Patent Office
Office européen
des brevets

(11) **EP 2 722 639 A1**

(12) **EUROPEAN PATENT APPLICATION**

(43) Date of publication:
**23.04.2014 Bulletin 2014/17**

(51) Int Cl.:
***G01B 11/06*** (2006.01)

(21) Application number: **13188420.7**

(22) Date of filing: **14.10.2013**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(30) Priority: **17.10.2012 JP 2012229430**

(71) Applicant: **AISIN SEIKI KABUSHIKI KAISHA
Kariya-shi, Aichi 448-8650 (JP)**

(72) Inventors:
• **Ohtake, Hideyuki
Kariya-shi, Aichi 448-8650 (JP)**
• **Takayanagi, Jun
Kariya-shi, Aichi 448-8650 (JP)**

(74) Representative: **TBK
Bavariaring 4-6
80336 München (DE)**

(54) **Method for measuring layer thickness of multilayer ceramic**

(57)    A method for measuring a layer thickness includes a process for generating a terahertz wave, a process for irradiating the terahertz wave to a multilayer ceramic (3) having a plurality of ceramic layers, a process for obtaining a time waveform of the terahertz wave reflected on the multilayer ceramic (3), and a process for measuring a layer thickness of the ceramic layer on the basis of the time waveform.

# F I G. 1

EP 2 722 639 A1

**Description**

TECHNICAL FIELD

This disclosure relates to a method for measuring thickness of each layer included in multilayer ceramic.

BACKGROUND DISCUSSION

A multilayer ceramic formed by laminating plural ceramic layers is applied as electronic components, for example, condensers and substrates. The multilayer ceramic is formed by pressure bonding (joining) or heating the laminated, or stacked ceramic layers.

In a normal multiple layers which is formed by laminating variety of materials, because physical properties, for example, refractive index, differ from one another at every layer, a thickness of each layer is measurable on the basis of the physical properties different from one another. On the other hand, with the multilayer ceramic which is formed by laminating plural ceramic layers each being made from the same material and having various porosities, because the physical properties of each layer are similar, it is difficult to measure the thickness by means of the known method which depends on physical properties of ceramic layers. In those circumstances, a region which has porosities within a predetermined range at the multilayer ceramic in which porosities vary in a thickness direction and which is made from the same material is defined as a layer.

Because the thickness of each layer of the multilayer ceramic (i.e., the thickness of the region which includes the porosities within the predetermined range set at each layer) can serve as an important indicator for inspecting and evaluating products including multilayer ceramic, an applicable method for measuring a layer thickness of multilayer ceramic is needed.

JP2004-333366A (i.e., hereinafter referred to as Patent reference 1) discloses a method for measuring layer thickness of the multilayer ceramic without destructing layers of the multilayer ceramic (nondestructive measurement) using ultrasonic waves.

According to the method for measuring the layer thickness disclosed in Patent reference 1, because the layer thickness is measured using a surface wave, a thickness of ceramic layer positioned at a surface only can be measured. Thus, a thickness of each layer included in the multilayer ceramic cannot be measured.

A thickness of each layer of multilayer ceramic may be measured by the observation using, for example, an electron microscope. However, because destruction of the sample is required in this method, this method is disadvantageous in terms of time consumption and manufacturing cost. Further, in this method, products to be marketed cannot be evaluated.

At present, a technology for measuring each layer thickness included in the multilayer ceramic in a non-contact and nondestructive manner is not known.

A need thus exists for a method for measuring a layer thickness for measuring a thickness of each layer included in multilayer ceramic in a non-contact and nondestructive manner.

SUMMARY

In light of the foregoing, the disclosure provides a method for measuring a layer thickness, which includes a process for generating a terahertz wave, a process for irradiating the terahertz wave to a multilayer ceramic having a plurality of ceramic layers, a process for obtaining a time waveform of the terahertz wave reflected on the multilayer ceramic, and a process for measuring a layer thickness of the ceramic layer on the basis of the time waveform.

According to the construction of the disclosure, a layer thickness of each of the layers included in the multilayer ceramic is measurable in a non-contact and nondestructive manner.

According to another aspect of the disclosure, the multilayer ceramic includes a first ceramic layer, and a second ceramic layer which is in contact with the first ceramic layer and includes a porosity different from a porosity of the first ceramic layer.

According to still another aspect of the disclosure, the first ceramic layer and the second ceramic layer are formed using a same ceramic material.

According to further aspect of the disclosure, the process for measuring the layer thickness includes a process for detecting two peaks corresponding to interfaces of the ceramic layers in the time waveform and a process for calculating the layer thickness on the basis of a time difference between said two peaks.

BRIEF DESCRIPTION OF THE DRAWINGS

The foregoing and additional features and characteristics of this disclosure will become more apparent from the following detailed description considered with the reference to the accompanying drawings, wherein:

Fig. 1 is a block diagram of an inspection system for inspecting multilayer ceramic according to an embodiment disclosed here;

Fig. 2 is a schematic view of an optical system according to the embodiment disclosed here;

Fig. 3 is a block diagram of a control device according to the embodiment disclosed here;

Fig. 4 is a cross-sectional view of a sample including multilayer ceramic according to the embodiment disclosed here;

Fig. 5 shows an example of peak patterns according to the embodiment disclosed here;

Fig. 6 shows a flowchart for a method for measuring a layer thickness of multilayer ceramic according to the embodiment disclosed here;

Fig. 7 shows a flowchart for a layer thickness measurement process according to the embodiment disclosed here;

Fig. 8A shows a flowchart for a peak detection processing according to the embodiment disclosed here;

Fig. 8B shows the flowchart for the peak detection processing according to the embodiment disclosed here;

Fig. 9 shows a waveform data of a terahertz wave according to the embodiment disclosed here; and

Fig. 10 shows a layer thickness measurement result according to the embodiment disclosed here.

DETAILED DESCRIPTION

Embodiments of a method for measuring a layer thickness of multilayer ceramic will be explained with reference to illustrations of drawing figures as follows. In the descriptions and drawings, the same numeral is provided for the members having the same function and the explanations may not be repeated for the members having the same function.

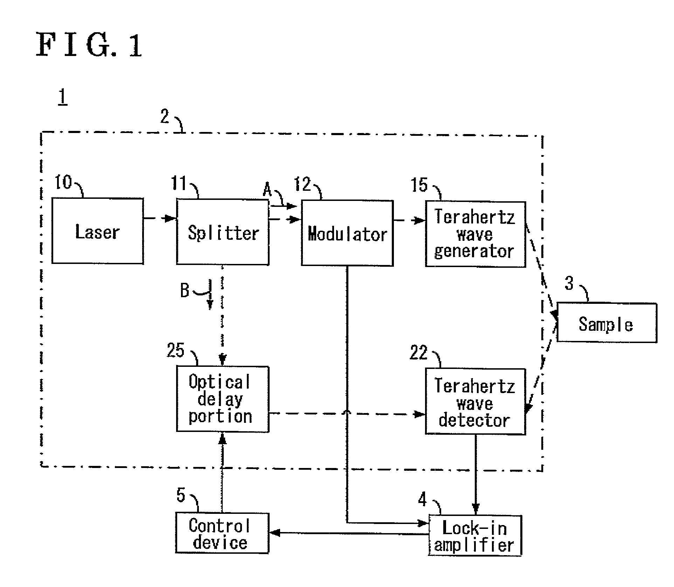

Fig. 1 shows a block diagram of an inspection system 1 for multilayer ceramic according to the embodiment. In Fig. 1, a broken line shows an optical path which laser beams or terahertz waves pass through and a solid line shows a physical connection. Directions of light and electric signals are indicated with arrows. The inspection system 1 includes an optical system 2 irradiating the terahertz wave to a sample 3 which includes the multilayer ceramic and detecting a reflective wave, a lock-in amplifier 4 synchronously amplifying detection signal of the reflective wave, and a control device 5 for controlling the optical system 2. The optical system 2 includes a laser 10, a splitter 11, a modulator 12, a terahertz wave generator 15, a terahertz wave detector 22, and an optical delay portion 25.

The laser beam irradiated from the laser 10 is split by the splitter 11 into a fundamental wave A and a second harmonic B. The fundamental wave A is modulated into a pulse with a predetermined frequency by means of the modulator 12 to be incident on the terahertz wave generator 15 as a pumping light. The terahertz wave generated at the terahertz wave generator 15 is irradiated to the sample 3, and the reflective wave which is the terahertz wave reflected on the surface of the sample 3 assumes to be incident on, or enters the terahertz wave detector 22.

On the other hand, the second harmonic B obtained by splitting the laser beam by the splitter 11 is applied as a probe light. The probe light is delayed by the optical delay portion 25 to be incident onto the terahertz wave detector 22. The terahertz wave detector 22 detects the reflective wave from the sample 3 at a timing when the probe light reaches.

The lock-in amplifier 4 is configured to amplify signals with high signal-to-noise ratio by detecting and integrating detected electric current while being synchronized with modulation frequency. The signal amplified by the lock-in amplifier 4 is inputted into the control device 5 as measurement data.

The control device 5 controls the optical delay portion 25 for varying delays of probe light (i.e., changing timings that the probe light reaches) and detects the reflective wave via the lock-in amplifier 4 to acquire a time waveform. Then, the control device 5 analyzes the time waveform of the reflective wave and calculates the layer thickness of the multilayer ceramic.

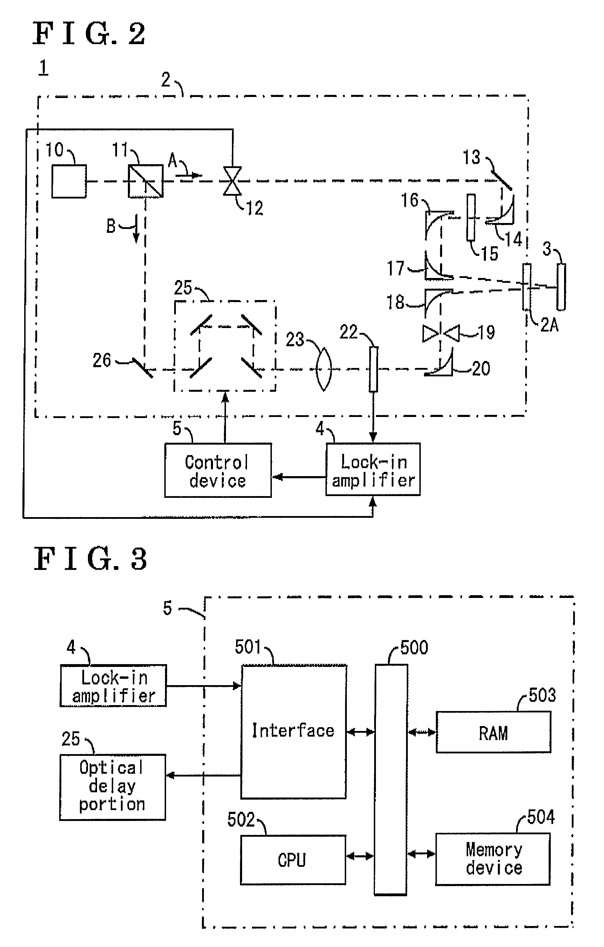

As illustrated in Fig. 2, the optical system 2 includes a femtosecond fiber laser 10, a dichroic mirror (splitter) 11, a chopper (modulator) 12, a mirror 13, a fundamental wave collecting parabolic mirror 14, a DAST (terahertz wave generator) 15, an off-axis parabolic mirrors 16, 17, 18, 20, an aperture 19, a terahertz wave detector 22, a condenser lens 23, an optical delay portion 25, and a mirror 26. The optical system 2 is sealed from the outside by means of a case. It is favorable that the inside of the case is dehumidified, the gas is charged into the case, or the inside of the case is vacuumed. According to the foregoing construction, it is prevented that the terahertz wave is absorbed by moisture in the air.

The femtosecond fiber laser 10 is configured to generate the light at 1550nm wavelength by exciting an optical fiber doped with, for example, erbium (Er) by means of the excitation light. The generated light at 1550nm wavelength is resonated between a pair of mirrors, and outputted as a high-power light pulse via a polarized beam splitter. The outputted light pulse includes the fundamental wave corresponding to 1550nm component and the second harmonic corresponding to 780nm component. According to a general fiber laser, 1 micron band, or 1.5 micron band serves as the fundamental wave. It is favorable to generate the second harmonic serving as the probe light in a case where a dipole antenna with GaAs substrate is applied as the terahertz wave detector 22.

The dichroic mirror 11 is structured by coating a white board glass with dielectric substances having different refractive indexes alternatively and splits the light pulse outputted from the femtosecond fiber laser 10 into the fundamental wave A corresponding to 1550nm component and the second harmonic B corresponding to 780nm component. According to the embodiment, the intensity of the fundamental wave A corresponding to 1550nm component is approximately 100mW, and a pulse width of the fundamental wave A is 17fs. The intensity of the second harmonic B corresponding to 780nm component is approximately 10mW, and a pulse width of the second harmonic B is 37fs. The fundamental wave A with 1550nm wavelength is used for generating a terahertz wave, and the second harmonic B with 780nm wavelength is used as a probe light at the terahertz wave detector. The wavelengths are not limited to the foregoing examples, and other numerical values, or wavelengths are applicable.

In place of the dichroic mirror, alternatively, a beam splitter for a fundamental wave may be applied and a wavelength conversion element may be positioned between the beam splitter and the optical delay portion 25. In those circumstances, it is favorable that the wavelength bandwidth of the beam splitter is as broad as possible. Further, in order not to extend the pulse width, it is favorable that a thickness of an element of the beam splitter is assumed to be equal to or smaller than 0.5mm. Further, in case of using a laser which oscillates with a single center wavelength, for example, a titanium-sapphire laser as a laser light source, the fundamental wave may be split by the beam splitter.

The chopper 12 is provided at an optical path of the fundamental wave A which transmits, or passes through the dichroic mirror 11. The chopper 12 may be replaced by an acosto-optic element (Acousto-Optic Modulator, AOM) or an electro-optic element (Electro-Optic Modulator, EOM). It is favorable that the modulation frequency by the chopper 12 is set at a relatively high level, for example, about one-tenth of repetition frequency of the laser (i.e., pulse repetition frequency), and the modulation frequency at 1 kHz is applied according to the embodiment. The chopper 12 is configured to output signals of the modulation frequency, and the modulation frequency is inputted to the lock-in amplifier 4. According to the foregoing construction, the lock-in amplifier 4 is allowed to perform detection synchronous to the modulation frequency.

The mirror 13 directs the optical path of the fundamental wave modulated by the chopper 12 towards the fundamental wave collecting parabolic mirror 14. The fundamental wave collecting parabolic mirror 14 is arranged to collect, or to condense the fundamental wave reflected at the mirror 13 to the DAST 15.

The DAST (4-dimethylamino-N- methyl-4-stilbazolium tosylate) 15 is an organic nonlinear optical crystal known as an organic nonlinear optical crystal having high optical constant. Using a femtosecond fiber laser, which is an ultra short pulse laser, a terahertz wave equal to or greater than a few ten THz can be generated.

According to the embodiment, the application is not limited to the DAST. Alternatively, for example, a laser wavelength conversion nonlinear crystal, for example, $LiNbO_3$, MgO doped $LiTaO_3$, BBO, LBO, KTP, and a semiconductor crystal, for example, ZnTe, GnSe, GaP, GaAs may be applicable. Further, alternatively, KDP, ADP, $KNbO_3$, $BaTiO_3$, and lead system or zirconium system ferrodielectric crystal may be applicable. Further, alternatively, lead system relaxor, for example, PMN, PZN, PZT, and a quantum paraelectric system relaxor substance, for example, $KT_{a1-x}NbxO_3$, $K_{1-x}Li_xTaO_3$, $Sr_{1-x}Ca_xTiO_3$ ($0 < x < 1$) may be applicable.

Further, in order to generate the terahertz wave, instead of nonlinear crystal, a wave transmitting type or wave reflective type terahertz wave generating antenna may be applicable.

The terahertz wave generated by the DAST 15 is reflected and collected at the off-axis parabolic mirrors 16, 17 to be radiated to the sample 3. The terahertz wave reflected at the sample 3 is reflected and collected at the off-axis parabolic mirrors 18, 20 to be incident to the terahertz wave detector 22. A window 2A is provided at a case which covers the optical system 2, the terahertz wave passes through the window 2A to be irradiated to the sample 3, and the terahertz wave reflected at the sample 3 passes through the window 2A to be incident on, or to enter the optical system 2. In those circumstances, it is favorable that the window 2A is closed by a transparent member at least for the terahertz wave (i.e., a member transmitting at least terahertz wave) so that the sealing performance of the case for the optical system 2 is not impaired.

The off-axis parabolic mirrors 18, 20 collect the terahertz reflected at the sample 3 to the terahertz wave detector 22. The aperture 19 is provided between the off-axis parabolic mirrors 18, 20. Because a minute, or hyper fine protrusions and recesses exist on the sample 3, differences in length of path is generated between a reflective wave at a center portion of the terahertz wave (i.e., referred to as a regular reflection wave) and a reflective wave at a periphery portion of the terahertz wave. In consequence, detection resolution of the layer thickness may decline. The aperture 19 is adjusted to block the reflective wave at the periphery portion of the terahertz wave and to allow the regular reflection wave to enter, or to be incident on the terahertz wave detector 22. Alternatively, the aperture 19 may be provided between the sample 3 and the off-axis parabolic mirror 18. Further, alternatively, the plural apertures 19 may be provided on an optical path of the reflective wave.

The terahertz wave detector 22 is formed as a dipole antenna by providing a metal electrode having a gap on a substrate made from a photoconductive semiconductor film (e.g., low-temperature-grown GaAs). On a first side of the substrate, that is, on the side to which the reflective wave from the sample 3 enters, or is incident, a hemispherical lens is provided, and the terahertz wave that is incident on the hemispherical lens converges, or focuses on the gap portion of the dipole antenna. On a second side of the substrate, that is, on the side to which the probe light from the optical delay portion 25 enters, or is incident, the condenser lens 23 is provided, and the femtosecond probe light is condensed, or collected by the condenser lens 23. The condensed probe light is irradiated at the gap of the dipole antenna, and a carrier is generated at the substrate. The motion of the carrier is accelerated at the oscillatory electric field accompanied with the terahertz wave, and the instantaneous electric current proportional to the electric field of the terahertz wave is attained. By measuring the instantaneous electric current, the intensity of the electric field of the terahertz pulse wave can be measured.

The mirror 26 is provided on an optical path of the second harmonic B serving as the probe light that transmits, or passes through the dichroic mirror 11. The second harmonic B reflects on the mirror 26 to enter, or to be incident on the optical delay portion 25. The optical delay portion 25 includes a fixed mirror and a movable mirror, and a delay of the probe light is determined in accordance with the position of the movable mirror. That is, by the changes in an optical path length of the probe light, timing that the probe light reaches the terahertz wave detector 22 can be determined. Thus, by the measurement of the electric field of the terahertz wave that repeatedly arrives while changing the timing that the probe light reaches the terahertz wave detector 22, sampling of waveforms of the terahertz wave can be performed. A drive portion, for example, an actuator is provided at the movable mirror. The position of the movable mirror is changed in response to controlling of the drive portion by the control device 5.

According to the embodiment, the optical delay portion 25 is provided on the optical path of the probe light (second harmonic). However, alternatively, the optical delay portion 25 may be provided on an optical path of the pumping light (fundamental wave). Further, alternatively, the optical delay portion 25 may be provided on the optical paths of the probe light and the pumping light. Still further, the plural optical delay portions 25 may be provided.

The lock-in amplifier 4 is configured to amplify signals with high signal-to-noise ratio by detecting and integrating detected electric current while being synchronized with modulation frequency. Namely, a signal of modulation frequency at the chopper 12 is inputted to the lock-in amplifier 4, and the lock-in amplifier 4 can amplify a feeble detected electric current from the terahertz wave detector 22 while being synchronized with the signal of the modulation frequency. The signal amplified by the lock-in amplifier 4 is inputted to the control device 5 as the measurement data showing the terahertz wave reflected on the sample 3.

As illustrated in Fig. 3, the control device 5 is structured with, for example, a computer, and includes a data bus 500, an interface 501, a CPU 502, a RAM 503, and a memory device 504. Further, the control device 5 includes an input device, for example a keyboard, a mouse, and a switch, for receiving an input from an operator, and a display device, for example, a liquid crystal display and an indicator lamp, for showing the information and situations to the operator.

The data bus 500 serves as a path for transferring data to/from each portion, for example, the CPU 502 and the interface 501. The interface 501 is a port for inputting and outputting the data. The lock-in amplifier 4 and the optical delay portion 25 are connected to the interface 501. The control device 5 controls the lock-in amplifier 4 and the optical delay portion 25 via the interface 501.

The CPU 502 reads out and executes a program pre-stored in the memory device 504, controls the optical system 2, and analyzes the measurement data. The RAM 503 is a memory serving as a work area for executing the program.

The memory device 504 is a hard disc drive for storing the program and the measurement data. The memory device 504 may include a removable media, for example, a CD, a DVD, and a flush memory.

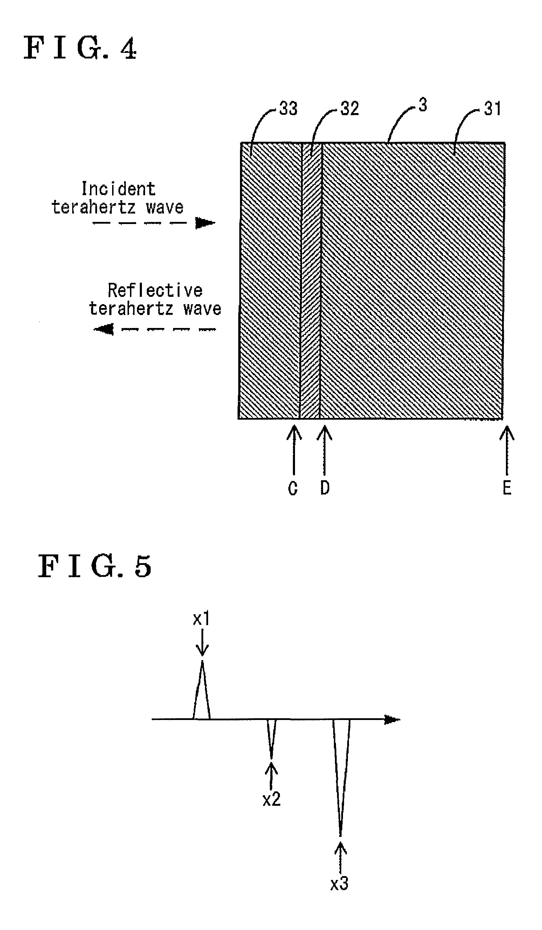

Principles for the measurement of the layer thickness according to the embodiment will be explained as follows. Fig. 4 shows a cross section of the sample 3 including the multilayer ceramic. The sample 3 includes a porous yttria stabilized zirconia layer (porous YSZ layer) 31 and an yttria stabilized zirconia layer (YSZ layer) 32 formed on the porous YSZ layer 31 as multilayer ceramic. The porous YSZ layer 31 is made from porous yttria stabilized zirconia. The YSZ layer 32 is made from normal yttria stabilized zirconia which is not porous. That is, the lamination of the porous YSZ layer 31 and the YSZ layer 32 is a multilayer ceramic which is formed by laminating ceramic layers made from the same material and having different porosities. Further, a coating layer 33 is formed on a surface of the YSZ layer 32 of the sample 3. According to the sample 3 of the embodiment, the refractive index relative to the terahertz wave at the YSZ layer 32 is approximately 6.0, and the refractive index relative to the terahertz wave at the porous YSZ layer 31 is approximately 4.1, and the refractive index relative to the terahertz wave at the coating layer 33 is approximately 3.0. The refractive index of the layer can be attained in advance by experiments and simulations.

The construction of the sample 3 whose layer thickness is measurable by means of the method for measuring layer thickness according to the embodiment is not limited to the foregoing. The multilayer ceramic may include two layers or may include plural layers. Each layer of the multilayer ceramic may include additives for the purpose of varying porosities. Further, each layer of the multilayer ceramic may be made from a ceramic material other than yttria stabilized zirconia (YSZ), and further alternatively, layers of the multilayer ceramic may be made from ceramic materials which are different from one another. Further, alternatively, in addition to the multilayer ceramic, the layers may include a layer made from a material other than the ceramic, for example, a metal substrate, a resin substrate, and a paint film, or coating film.

As illustrated in Fig. 4, an interface C is an interface, or boundary between the coating layer 33 and the YSZ layer 32, an interface D is an interface, or boundary between the YSZ layer 32 and the porous YSZ layer 31, and an interface E is an interface, or boundary between the porous YSZ layer 31 and the air.

When the terahertz wave is incident (i.e., incident terahertz wave) onto the sample 3, the reflections occur at respective interfaces. In consequence, the reflective waves at each of interfaces, or boundaries appear as peaks in a time waveform of the terahertz wave which is reflected on the sample 3. A time difference between the peaks in the time waveform is a reflection of the layer thickness. That is, because the terahertz wave is reflected (i.e., reflective terahertz wave) on the outgoing interface within the layer which is an object of the measurement, a time difference Δt between the peaks corresponds to the time from the terahertz wave entering the incident interface (e.g., the interface C) until reaching the incident interface (e.g., the interface C) again after reflecting on the outgoing interface (e.g., the interface D), or boundary. Thus, the time from the incident of the terahertz wave at the incident interface until the terahertz wave reaches the outgoing interface, or boundary is defined as Δt/2, and by defining an incidence angle relative to the outgoing interface as θ, the velocity of light as c, and a refractive index of the layer which is a measurement object as n, a layer thickness d of the layer which is the measurement object is described as Equation 1 shown below.

$$[Equation\ 1]\quad d = \Delta t \cdot c \cdot \cos\theta / 2n$$

The reflective waves at the interfaces, or boundaries of the sample 3 are determined by the reflection coefficient, or reflection factor at the interface, or boundary of two layers. Thus, in a case where the reflection coefficient, or reflection factor is known, the intensity of the peaks and a direction, or orientation of the peaks (positive peak, negative peak) which appear in the reflective wave can be estimated. Here, the reflection coefficient r is calculated based on the following equation from the refractive indexes $n_1$, $n_2$ of the two layers.

$$[Equation\ 2]\quad r = \frac{n_1 - n_2}{n_1 + n_2}$$

By substituting the refractive index of each layer in the Equation 2 to calculate the reflection coefficient at the interface, a pattern of the peaks which appear in the reflective wave can be estimated in advance. Referring to the Equation 2, according to the sample 3 of the embodiment, the refractive index of the YSZ layer 32 is approximately 6.0, the refractive index of the porous YSZ layer 31 is approximately 4.1, the refractive index of the coating layer 33 is approximately 3.0, and the refractive index of the air is approximately 1.0. Thus, the reflection coefficients of the interfaces, C, D, E are assumed to be approximately -0.3, 0.2, and 0.6, respectively.

Fig. 5 shows a schematic view of a pattern of the peaks (peak pattern) which is estimated from the reflection coefficients calculated from the Equation 2 using the pre-attained refractive index. According to the Equation 2, because the reflection coefficient is assumed to have negative value at the incident interface where the terahertz wave enters the sample 3 from the air, the indication of the positive and negative of the pattern of the peaks are defined to be opposite to the positive and negative of the reflection coefficient for the explanatory purpose. According to the sample 3 of the embodiment, the peak pattern in which the positive peak, negative peak, and negative peak appear in the mentioned order in the time waveform is estimated. Alternatively, the peak pattern may be determined on the basis of the actually measured value.

Further, in a case where a range of the layer thickness at the sample 3 (layer thickness range) is attained in advance, a temporal range, or time range between the peaks which appear in the waveform can be estimated. According to the embodiment, as explained hereinafter, by pre-determining the peak pattern and inputting the estimated value of the layer thickness range and an intensity ratio range, the peak corresponding to the interface can be accurately detected among the numerous peaks which appear in the waveform.

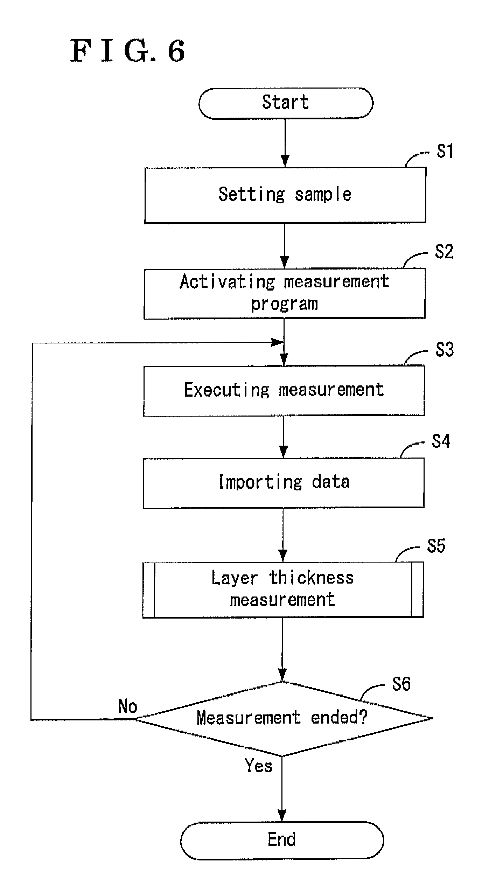

Fig. 6 shows a flowchart for the method for measuring layer thickness of the multilayer ceramic according to the embodiment. First, an operator sets the sample 3 including the multilayer ceramic which serves as an object of the inspection to the optical system 2 (Step S1). In this step, an angle of the sample 3 relative to the optical system 2 is adjusted so that the terahertz wave reflected on the sample 3 passes through the aperture 19. Thereafter, upon the operation of the control device 5 by the operator to activate a measurement program, the CPU 502 executes the measurement program stored in the memory device 504 to initialize the optical system 2, the lock-in amplifier 4, and the control device 5 (Step S2).

Thereafter, the control device 5 executes the measurement of the time waveform of the terahertz wave (Step S3). The optical pulse, or light pulse of the femtosecond fiber laser 10 is split into the fundamental wave corresponding to 1550nm component and the second harmonic corresponding to 780nm component at the dichroic mirror 11, the fundamental wave is incident on, or enters the chopper 12, and the second harmonic is incident on, or enters the optical delay portion 25. The chopper 12 modulates the fundamental wave at a predetermined modulation frequency (e.g., 1 kHz). The modulated fundamental wave is reflected on the mirror 13 and the fundamental wave collecting parabolic mirror 14, and is condensed at the DAST 15. The terahertz wave generated by the DAST 15 is reflected on the off-axis parabolic mirrors 16, 17 and is condensed, or collected at the sample 3.

The terahertz wave reflected on the sample 3 is collimated by the off-axis parabolic mirror 18. Further, the terahertz wave passes through an opening portion of the aperture 19. According to the embodiment, by providing the aperture 19, the reflective wave at a periphery portion of the terahertz wave is blocked and the reflective wave at a center portion of the terahertz wave (regular reflection wave) only is allowed to pass through the aperture 19. According to the foregoing construction, the regular reflection wave of the terahertz wave which is reflected on the sample 3 only passes through the opening portion of the aperture 19 to be detected by the terahertz wave detector 22.

The terahertz wave which passed through the aperture 19 is condensed, or collected at the gap of the dipole antenna provided at the terahertz wave detector 22 by means of the off-axis parabolic mirror 20. The pulse of the terahertz wave is repeatedly condensed, or collected at the terahertz wave detector 22 at the modulation frequency (1 kHz). On the other hand, the probe light which delays a predetermined time by means of the optical delay portion 25 is irradiated at the gap of the dipole antenna provided at the terahertz wave detector 22. In those circumstances, a feeble electric current which is proportional to the electric field of the terahertz wave flows and the feeble electric current is synchronously detected by the lock-in amplifier 4. The lock-in amplifier 4 converts the amplified electric current to the digital data by means of an analog-to-digital converter (A/D converter) and stores the data in the memory. Thus, the intensity at the predetermined timing of the waveform of the terahertz wave is measured.

In order to sample the waveform of the terahertz wave, the electric field intensity at the terahertz wave detector 22 is measured while shifting, or changing timing of the probe light. That is, the control device 5 actuates the movable mirror of the optical delay portion 25 to set a delay of the probe light at a delay time t1. The probe light is condensed at the terahertz wave detector 22, and the electric filed intensity of the terahertz wave at the timing of the delay time t1 is measured. Subsequently, the control device 5 sets a delay time, or delay at the optical delay portion 25 at a delay time t2. The electric field intensity of the terahertz wave at the timing of the delay time t2 is detected by the terahertz wave detector 22. Similarly, the delay at the optical delay portion 25 is shifted to a delay time t3, delay time t4, and delay time t5, for example, in the mentioned order, and thus the time waveform of the terahertz wave is sampled. The control device 5 imports the measured data which shows the waveform of the terahertz wave to store the measured data in the memory device 504 (Step S4).

The control device 5 extracts the peaks from the measured data and measures the layer thickness on the basis of the peaks (Step S5). The obtained measurement results are displayed on a display device provided at the control device 5. After executing the foregoing processes, in a case where the measurement is continuously performed (i.e., NO at Step S6), the control device 5 repeatedly executes the processes of Steps S3 to S5. On the other hand, in a case where the measurement is completed (i.e., YES at Step S6), the control device 5 ends the processes, or transactions.

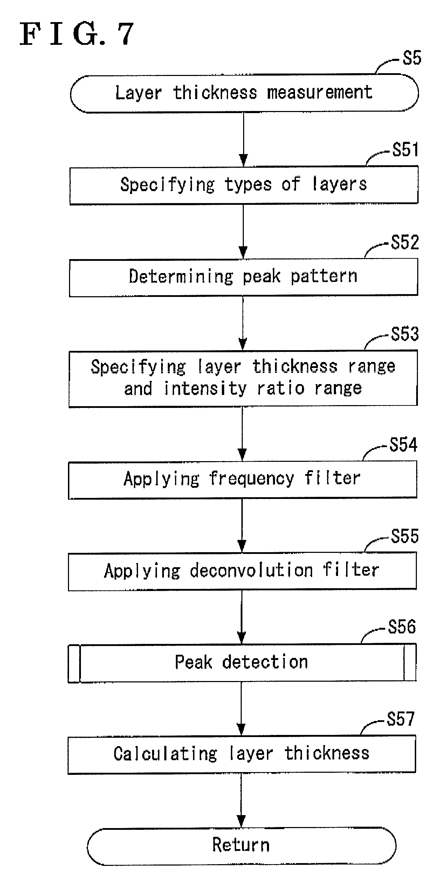

Fig. 7 shows a flowchart explaining details of a layer thickness measurement process (Step S5) according to the embodiment. First, the operator inputs the information of layer structure (e.g., the number of layers, refraction index of each layer, refraction index of the air) included in the sample 3 (i.e., specifying types of layers)(Step S51). The refraction index of the air may be stored in the memory device 504 in advance. Alternatively, the control device 5 displays the pre-recorded layer structures on the display device so as to allow the operator to select a layer structure. The control device 5 determines the peak pattern using the Equation 2 on the basis of the inputted layer structure to display the peak pattern on the display device (Step S52). That is, the control device 5 substitutes the refractive index of each of the layers and the refractive index of the air that the operator inputted at Step S51 in the Equation 2 to calculate the reflection coefficient r of interfaces, and determines the peak pattern on the basis of the calculated reflection coefficient r relative to each of the interfaces, or boundaries.

Further, the operator inputs the intensity ratio range and the layer thickness range that each of the layers may have via an input device of the control device 5 (i.e., specifying layer thickness range and intensity ratio range)(Step S53). The layer thickness range is a range of values that the layer thickness may have (i.e., the minimum value and maximum value). The intensity ratio range is a range of values that a ratio of the intensity at a peak relative to the intensity at another peak may take (i.e., minimum value and maximum value). Alternatively, the intensity ratio may be determined on the basis of a ratio of the reflection coefficients between layers calculated by the Equation 2. Further, alternatively, an intensity ratio range based on the actually measured values may be inputted. In a case where the observed peak or the layer thickness calculated based on the observed peak do not match the inputted intensity ratio range and the layer thickness range, it is determined that the observed peak is not caused by the reflection of the terahertz wave on the interface, or boundary (e.g., noise, multipath reflection, or multi reflection), and the observed peak is excluded.

The control device 5 removes the noise using a frequency filter, for example, a low-pass filter, from the measured waveform data (i.e., applying frequency filter)(Step S54). Thereafter, the control device 5 further removes noise components using a deconvolution filter which removes the noise components only (i.e., applying deconvolution filter)(Step S55). Regarding Step S54 and Step S55, alternatively, any filtering process may be performed as long as the noise is removable from the waveform data. Further, alternatively, in a case where the peak for calculating the layer thickness is detectable without removing the noise, the noise removing process may be omitted.

After attaining signal components only of the waveform data by the filtering process, the control device 5 detects the peak from the waveform data (i.e., peak detection)(Step S56). Thereafter, the control device 5 substitutes the time difference, or differential time between the detected peaks in the Equation 1 to calculate the layer thickness (i.e., calculating layer thickness)(Step S57). When the calculation of the layer thickness is completed, the transaction returns to the main flowchart illustrated in Fig. 7.

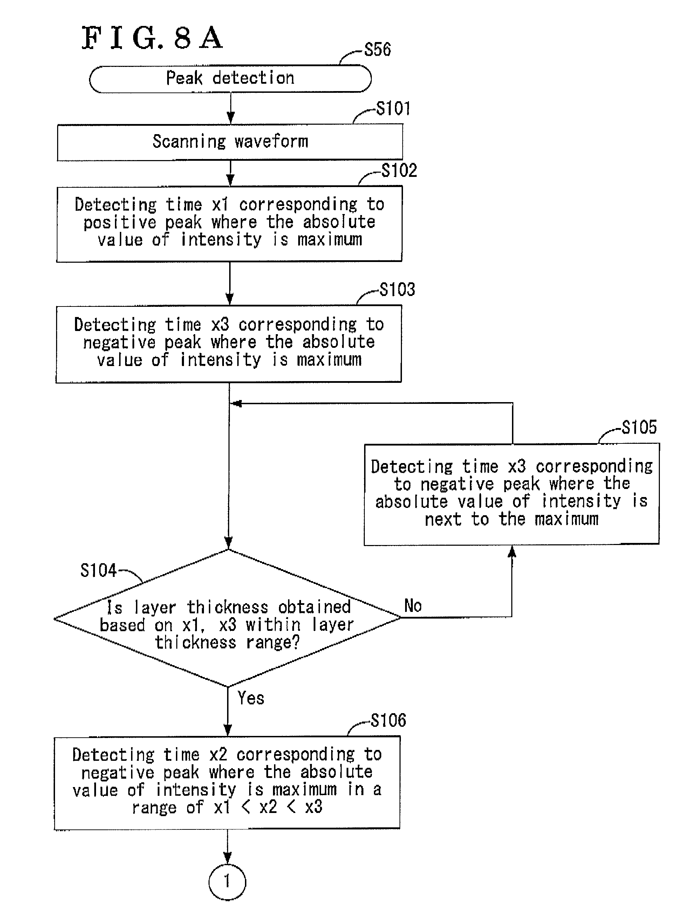

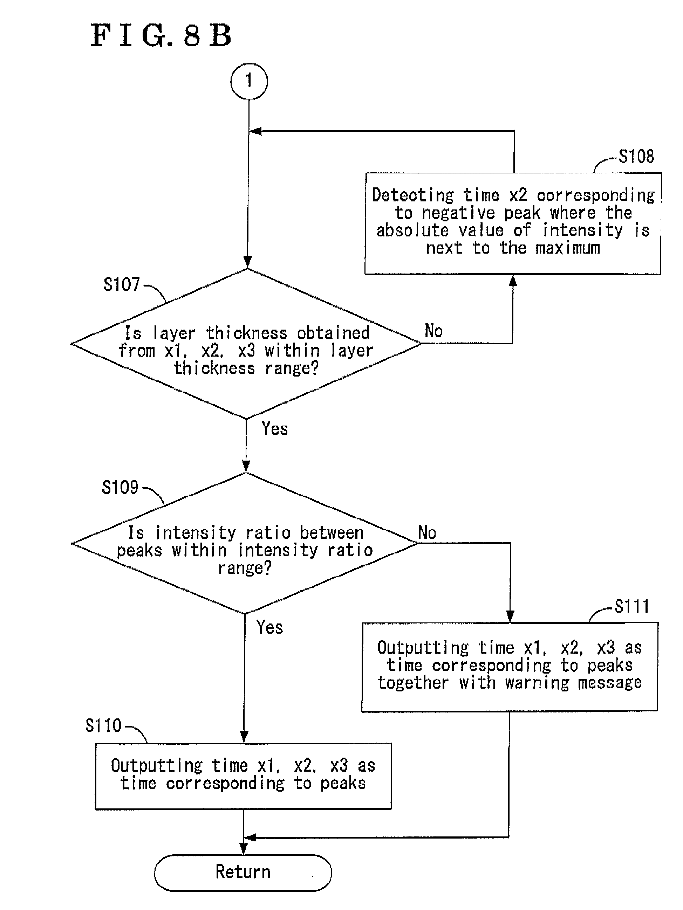

Figs. 8A and 8B show a flowchart explaining details of a peak detection processing (Step S56) according to the embodiment. Figs. 8A and 8B show an example, and a flow of the peak detection processing varies depending on a peak pattern (i.e., the number of peaks and whether the peaks are positive or negative) of a sample which is an object to be measured. Thus, it is necessary to modify the peak detection processing in accordance with the peak pattern of the sample of the object to be measured. It is favorable that the peak detection processing corresponding to each peak pattern is predefined, and the peak detection processing is selected in accordance with the peak pattern determined at Step S52. Figs. 8A and 8B show a flowchart for a case where the layer structure shown in Fig. 4 is inputted at Step S51 and the peak pattern is determined as illustrated in Fig. 5 at Step S52.

The control device 5 scans the waveform data which is processed with the filtering at Step S54 and Step S55 (Step S101). The control device 5 detects the positive peak where the absolute value of the intensity is the maximum from the measurement data (i.e., waveform data) showing the time waveform of the terahertz wave scanned at Step S101 on the basis of the peak pattern determined at Step S52, and obtains time x1 corresponding to the peak (Step S102). The peak in this case is for the interface C between the coating layer 33 and the YSZ layer 32.

Similarly, the control device 5 detects the negative peak where the absolute value of the intensity is the maximum, and obtains time x3 corresponding to the peak (Step S103). The peak in this case is for the interface E between the porous YSZ layer 31 and the air.

Then, it is determined whether the layer thickness obtained from a difference of the time x1 and the time x3 on the basis of the Equation 1 (i.e., layer thickness of the lamination of the YSZ layer 32 and the porous YSZ layer 31) is within a predetermined layer thickness range (Step S104). The layer thickness range is the range inputted at Step S53, and corresponds to the range defined by the minimum value and the maximum value that the layer thickness can have.

In a case where the layer thickness obtained from the difference of the time x1 and the time x3 does not fall within the predetermined layer thickness range (i.e., NO at Step S104), there is a possibility that the peak is not detected properly. Thus, until fulfilling the condition defined at Step S104, the transaction is repeated deeming, or assuming that the negative peak where the absolute value of the intensity is next to the maximum corresponds to the interface E of the porous YSZ layer 31 and the air (Step S105).

Next, the control device 5 detects the peak where the absolute value of the intensity is the maximum among the negative peaks existing from time x1 to time x3 to obtain time x2 of the detected peak (Step S106). The peak in this case is for the interface D of the YSZ layer 32 and the porous YSZ layer 31. Further, the control device 5 determines whether the layer thickness obtained from the difference of time x3 and time x2 (i.e., the layer thickness of the porous YSZ layer 31) and the layer thickness obtained from the difference of time x2 and time x1 (i.e., the layer thickness of the YSZ layer 32) are within the predetermined layer thickness ranges (Step S107). The layer thickness ranges are inputted at Step S53 and correspond to the range defined by the minimum values and the maximum values that each of the layer thicknesses of the porous YSZ layer 31 and the YSZ layer 32 can have.

In a case where the layer thicknesses do not fall within the predetermined layer thickness ranges (i.e., NO at Step S107), it is possible that the peak is not properly detected. Thus, until fulfilling the conditions defined in Step S107, the transactions are repeated deeming, or assuming that the negative peak where the absolute value of the intensity is next to the maximum corresponds to the interface D of the YSZ layer 32 and the porous YSZ layer 31 (Step S108).

Subsequently, the control device 5 extracts peak values f(x1), f(x2), f(x3) of times x1, x2, x3, respectively, from the waveform data and determines whether each of intensity ratios f(x1)/f(x3), f(x2)/f(x3) of the peak values falls within the predetermined intensity ratio range (Step S109). Here, f(x) shows the intensity at time x. In those circumstances, although f(x3) is applied as a reference for the intensity ratio, in the embodiment, other definitions of the intensity ratio applying f(x1) or f(x2) as a reference are applicable. The intensity ratio range here is inputted at Step S53.

In a case where the conditions at Step S109 are satisfied, the control device 5 outputs time x1, time x2, and time x3 as times, or timing for peaks corresponding to the interfaces, respectively (Step S110). In a case where the conditions at Step S109 are not satisfied, it is possible that the measurement error occurs. Thus, the control device 5 outputs the time x1, time x2, and time x3 as times, or timing for peaks corresponding to the respective interfaces together with warning messages (Step S111).

As explained above, according to the construction of the embodiment, by detecting the plural peaks from the waveform data in accordance with the peak pattern determined by the control device 5, an erroneous detection of multipath reflection, or multi reflection and noise as the peak of the interface is avoidable. Further, by detecting the peaks in a descending order from the peak having greater amplitude, or oscillation in the waveform data, an erroneous detection of multipath reflection, or multi reflection and noise as the peak of the interface is avoidable. Further, by pre-inputting the layer thickness range and the intensity ratio range of the sample which is the object of the measurement, a measurement error caused by an erroneous detection of the peak is avoidable.

According to the embodiment, the control device 5 performs peak detection. Alternatively, the operator may determine the peak for calculating the layer thickness on the basis of the waveform data displayed on the display of the control device 5 to specify the peak by the input device of the control device 5.

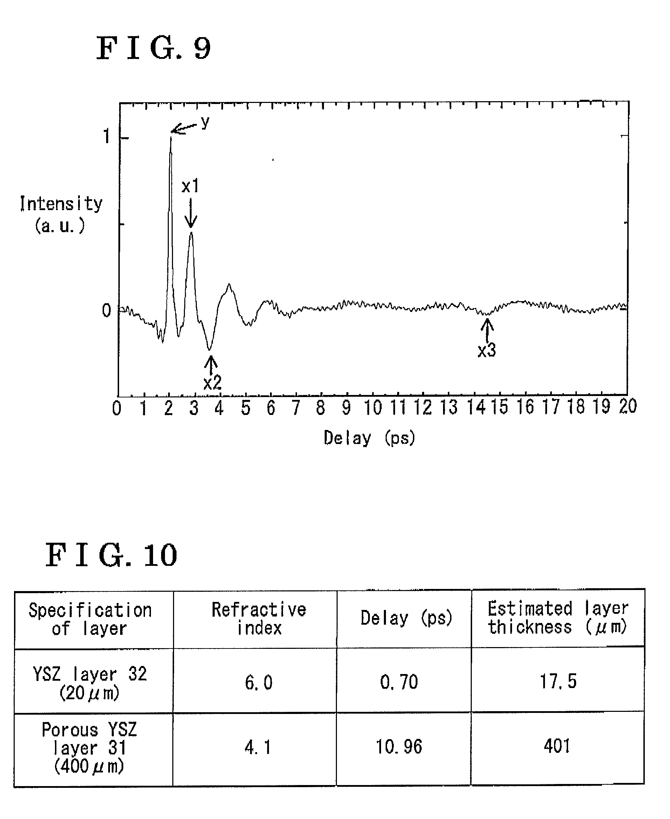

Measurement of the layer thickness of a sample including multilayer ceramic using the method for measuring layer thickness according to the embodiment will be explained as follows. Fig. 9 shows the waveform data of the terahertz wave obtained according to the embodiment. Horizontal axis in Fig. 9 shows time (delay of pulse, delay (ps)) and vertical axis in Fig. 9 shows the intensity. The sample 3 which is applied as the object of the measurement includes the structure shown in Fig. 4. The layer thickness of the coating layer 33 is 60μm, the layer thickness of the YSZ layer 32 is 20μm, and the layer thickness of the porous YSZ layer 31 is 400μm.

As illustrated in Fig. 9, in the peak detection processing (Step S56), it is detected that the positive peak at time x1 corresponds to the interface C shown in Fig. 4, the negative peak at time x2 corresponds to the interface D shown in Fig. 4, and the negative peak at time x3 corresponds to the interface E shown in Fig. 4. In those circumstances, the peak detection processing is performed disregarding the significant positive peak indicated with "y" because the peak indicated with "y" corresponds to the interface of the air and the coating layer 33. Other peaks are presumed as caused by noises and multipath reflection, or multi reflection generated within the layer. According to the sample 3 of the embodiment, the terahertz wave is significantly attenuated, or decayed because the porous YSZ layer 31 is thick, and the peak at the time x3 is significantly small compared to the peak pattern estimated from the refractive index (see Fig. 5).

Fig. 10 shows a measurement result of the layer thickness calculated from the Equation 1 on the basis of the waveform shown in Fig. 9. The delay of the YSZ layer 32 corresponds to the time difference, or differential time of the time x1 and the time x2 between the peaks, and the delay of the porous YSZ layer 31 corresponds to the time difference, or differential time of the time x2 and time x3 between the peaks. The estimated layer thicknesses (i.e., 17.5μm at the YSZ layer 32, 401μm at the porous YSZ layer 31) calculated on the basis of the delays are approximate to the values of actual layer thicknesses (i.e., 20μm at the YSZ layer 32, 400μm at the porous YSZ layer 31). According to the embodiment, the incidence angle of the terahertz wave to the sample 3 is approximately 10 degrees, which is deemed as small, and because the terahertz wave enters, or is incident on the sample 3 from the air to the sample 3 which includes large refractive index, the advancing angle of the terahertz wave in the sample 3 is assumed to be further smaller. Thus, according to the embodiment, cosθ in the Equation 1 is calculated to be approximate to one (1). In a case where it is necessary to obtain the result with higher precision, alternatively, the accurate cosθ may be calculated.

Thus, according to the method for measuring layer thickness of the embodiment, the layer thickness of each layer of the multilayer ceramic made from the same material and having different porosities can be measured.

A method for measuring a layer thickness includes a process for generating a terahertz wave, a process for irradiating the terahertz wave to a multilayer ceramic (3) having a plurality of ceramic layers, a process for obtaining a time waveform of the terahertz wave reflected on the multilayer ceramic (3), and a process for measuring a layer thickness of the ceramic layer on the basis of the time waveform.

**Claims**

1. A method for measuring a layer thickness, comprising
   a process for generating a terahertz wave;
   a process for irradiating the terahertz wave to a multilayer ceramic (3) having a plurality of ceramic layers;
   a process for obtaining a time waveform of the terahertz wave reflected on the multilayer ceramic (3); and
   a process for measuring a layer thickness of the ceramic layer on the basis of the time waveform.

2. The method for measuring the layer thickness according to claim 1, wherein
   the multilayer ceramic (3) includes a first ceramic layer (31), and a second ceramic layer (32) which is in contact with the first ceramic layer (31) and includes a porosity different from a porosity of the first ceramic layer (31).

3. The method for measuring the layer thickness according to claim 2, wherein the first ceramic layer (31) and the second ceramic layer (32) are formed using a same ceramic material.

4. The method for measuring the layer thickness according to claim 1, wherein the process for measuring the layer thickness includes a process for detecting two peaks corresponding to interfaces of the ceramic layers in the time waveform and a process for calculating the layer thickness on the basis of a time difference between said two peaks.

FIG. 1

# FIG. 2

# FIG. 3

# F I G. 4

# F I G. 5

# F I G. 6

```
                    ┌─────────────┐
                    │    Start    │
                    └──────┬──────┘
                           │
                           ▼               ⌐ S1
              ┌─────────────────────────┐
              │     Setting sample      │
              └────────────┬────────────┘
                           │
                           ▼               ⌐ S2
              ┌─────────────────────────┐
              │  Activating measurement │
              │         program         │
              └────────────┬────────────┘
                           │
          ┌───────────────►│               ⌐ S3
          │   ┌─────────────────────────┐
          │   │   Executing measurement │
          │   └────────────┬────────────┘
          │                │
          │                ▼               ⌐ S4
          │   ┌─────────────────────────┐
          │   │      Importing data     │
          │   └────────────┬────────────┘
          │                │
          │                ▼               ⌐ S5
          │   ┌─────────────────────────┐
          │   │      Layer thickness    │
          │   │       measurement       │
          │   └────────────┬────────────┘
          │                │
          │                ▼               ⌐ S6
          │            ◇─────────────◇
      No  └───────────  Measurement ended?
                       ◇─────────────◇
                           │ Yes
                           ▼
                    ┌─────────────┐
                    │     End     │
                    └─────────────┘
```

13

# FIG. 7

S5
```
Layer thickness measurement
```

S51
```
Specifying types of layers
```

S52
```
Determining peak pattern
```

S53
```
Specifying layer thickness range
and intensity ratio range
```

S54
```
Applying frequency filter
```

S55
```
Applying deconvolution filter
```

S56
```
Peak detection
```

S57
```
Calculating layer thickness
```

```
Return
```

# FIG. 8A

S56
( Peak detection )

S101
| Scanning waveform |

S102
Detecting time x1 corresponding to positive peak where the absolute value of intensity is maximum

S103
Detecting time x3 corresponding to negative peak where the absolute value of intensity is maximum

S105
Detecting time x3 corresponding to negative peak where the absolute value of intensity is next to the maximum

S104
Is layer thickness obtained based on x1, x3 within layer thickness range?    No

Yes

S106
Detecting time x2 corresponding to negative peak where the absolute value of intensity is maximum in a range of x1 < x2 < x3

( 1 )

# FIG. 8B

```
                    ( 1 )
                      │
                      │←─────────────────────────────────┐
                      │                                   │
                      │                          ┌─────────────────── S108
                      │                          │
                      │            ┌──────────────────────────────────────┐
                      │            │ Detecting time x2 corresponding        │
                      │            │ to negative peak where the             │
                      │            │ absolute value of intensity is         │
                      │            │ next to the maximum                    │
                      │            └──────────────────────────────────────┘
                      ▼                                   ▲
         S107 ┐     ╱◇╲                                   │
              └──  ╱     ╲                            No  │
                 ╱ Is layer thickness  ╲──────────────────┘
                 ╲ obtained from x1, x2, x3 ╱
                 ╲ within layer            ╱
                  ╲ thickness range?      ╱
                    ╲                   ╱
                      ╲               ╱
                        │ Yes
                        ▼
         S109 ┐       ╱◇╲
              └──    ╱     ╲                        No
                   ╱ Is intensity ratio  ╲─────────────────┐
                   ╲ between peaks within ╱                │
                   ╲ intensity ratio     ╱                 │
                    ╲ range?            ╱                  │
                      ╲               ╱                     │
                        │ Yes                        ┌──────────── S111
                        │                            │
                        │              ┌──────────────────────────────────┐
                        │              │ Outputting time x1, x2, x3 as     │
                        │              │ time corresponding to peaks       │
                        │              │ together with warning message     │
                        │              └──────────────────────────────────┘
   S110 ┐               │                            │
        └──  ┌─────────────────────────┐             │
             │ Outputting time x1, x2, x3 as │        │
             │ time corresponding to peaks   │        │
             └─────────────────────────┘             │
                        │                             │
                        ▼◄────────────────────────────┘
                 ( Return )
```

# FIG. 9

# FIG. 10

| Specification of layer | Refractive index | Delay (ps) | Estimated layer thickness ($\mu$m) |
|---|---|---|---|
| YSZ layer 32 (20 $\mu$m) | 6. 0 | 0. 70 | 17. 5 |
| Porous YSZ layer 31 (400 $\mu$m) | 4. 1 | 10. 96 | 401 |

Europäisches
Patentamt

European
Patent Office

Office européen
des brevets

# EUROPEAN SEARCH REPORT

Application Number

EP 13 18 8420

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 2 196 766 A1 (AISIN SEIKI [JP]) 16 June 2010 (2010-06-16) * the whole document * | 1-4 | INV. G01B11/06 |
| X | WO 2011/105040 A1 (AISIN SEIKI [JP]; OHTAKE HIDEYUKI [JP]; UEHARA YUZURU [JP]; TAKAYANAGI) 1 September 2011 (2011-09-01) * the whole document * | 1-4 | |
| X | JP 2004 028618 A (OSAKA IND PROMOTION ORG) 29 January 2004 (2004-01-29) * the whole document * | 1-4 | |
| X | US 6 828 558 B1 (ARNONE DONALD DOMINIC [GB] ET AL) 7 December 2004 (2004-12-07) * the whole document * | 1-4 | |
| A | US 7 876 423 B1 (ROTH DONALD J [US]) 25 January 2011 (2011-01-25) * the whole document * | 1-4 | |
| A | WO 2005/052509 A1 (CANON KK [JP]; MIYAZAKI JUNGO [JP]; OUCHI TOSHIHIKO [JP]) 9 June 2005 (2005-06-09) * claims 1-13; figures 1-6 * | 1-4 | TECHNICAL FIELDS SEARCHED (IPC) G01B G01N |
| A,D | JP 2004 333366 A (TOSHIBA CERAMICS CO; TUNGALOY CORP) 25 November 2004 (2004-11-25) * abstract * | 1-4 | |

The present search report has been drawn up for all claims

| Place of search | Date of completion of the search | Examiner |
|---|---|---|
| Munich | 22 November 2013 | Passier, Martinus |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 13 18 8420

This annex lists the patent family members relating to the patent documents cited in the above-mentioned European search report.
The members are as contained in the European Patent Office EDP file on
The European Patent Office is in no way liable for these particulars which are merely given for the purpose of information.

22-11-2013

| Patent document cited in search report | | Publication date | Patent family member(s) | | Publication date |
|---|---|---|---|---|---|
| EP 2196766 | A1 | 16-06-2010 | EP 2196766 A1<br>JP 5177548 B2<br>JP 2010139402 A<br>US 2010149520 A1 | | 16-06-2010<br>03-04-2013<br>24-06-2010<br>17-06-2010 |
| WO 2011105040 | A1 | 01-09-2011 | CN 102770750 A<br>EP 2538200 A1<br>JP 2011196990 A<br>US 2012326037 A1<br>WO 2011105040 A1 | | 07-11-2012<br>26-12-2012<br>06-10-2011<br>27-12-2012<br>01-09-2011 |
| JP 2004028618 | A | 29-01-2004 | JP 4046158 B2<br>JP 2004028618 A | | 13-02-2008<br>29-01-2004 |
| US 6828558 | B1 | 07-12-2004 | AU 776886 B2<br>AU 5094300 A<br>EP 1190234 A1<br>JP 2004500546 A<br>US 6828558 B1<br>WO 0075641 A1 | | 23-09-2004<br>28-12-2000<br>27-03-2002<br>08-01-2004<br>07-12-2004<br>14-12-2000 |
| US 7876423 | B1 | 25-01-2011 | NONE | | |
| WO 2005052509 | A1 | 09-06-2005 | CN 1886637 A<br>EP 1690065 A1<br>JP 2005157601 A<br>US 2006244629 A1<br>WO 2005052509 A1 | | 27-12-2006<br>16-08-2006<br>16-06-2005<br>02-11-2006<br>09-06-2005 |
| JP 2004333366 | A | 25-11-2004 | NONE | | |

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2004333366 A